# EUROPEAN PATENT APPLICATION

(11) **EP 4 549 788 A1**
(43) Date of publication of application: **07.05.2025**
(21) Application number: 23275152.9
(22) Date of filing: 31.10.2023
(51) Int. Cl.: F16K 24/00, F16K 31/46

(54) **DRAIN VALVE ASSEMBLY**

(71) Applicant: B/E Aerospace (UK) Limited, Leighton Buzzard, Bedfordshire LU7 4TB (GB)
(72) Inventor: KALITVENCEVS, Germans, Milton Keynes, MK13 7LN (GB); LAJUX, Vincent M.O., Milton Keynes, MK11 2AA (GB)
(74) Representative: Dehns

(57) **Abstract**

A drain valve assembly comprising: an assembly housing; a drain valve (10) having a valve housing through which a flow channel is defined from an inlet port and an outlet port, and a moveable valve part moveable relative to the valve housing between a closed position between the inlet port and the outlet port and an open position displaced from between the inlet port and the outlet port; an override cable (16) having a first end attached to the moveable valve part and a second end remote from the drain valve, the cable positioned to move in a substantially vertical direction when a pulling force is applied, to move the moveable valve part to the open position, and being biased to return the moveable part to the closed position when the pulling force is removed from the cable; and characterised by comprising: a cable clamp bracket (100) fitted around the cable and defining a channel through which the cable can move in the substantially vertical direction and having a flange part providing two attachments points to secure the clamp bracket relative to the assembly housing and to prevent rotation of the clamp bracket relative to the assembly housing; and/or a drain valve clamp bracket (300) fitted around the drain valve and defining a channel through which the moveable part of the drain valve can move in the substantially vertical direction and having a flange part providing two attachments points to secure the drain valve clamp bracket relative to the assembly housing and to prevent rotation of the drain valve clamp bracket relative to the assembly housing.

## Description

### TECHNICAL FIELD

The present disclosure is concerned with improving opening of a drain valve, more specifically the override opening function of a drain valve.

### BACKGROUND

Drain valve assemblies are used in fluid systems in which fluid has to be drained from the system either at intervals or when other parts of the system have become full, or for maintenance or replacement etc. For example, drain valve are often used in waste water systems, e.g. in lavatory or sanitation systems. One example of where drain valves are commonly used is in aircraft waste systems.

A drain valve is typically located in a fluid line where fluid in the system collects. The drain valve comprises a valve housing having an inlet port in fluid communication with the fluid lines in the system and an outlet port in fluid connection with a drain outlet or drain line, and a moveable valve part that, in a closed position, is located in the housing between the inlet port and the outlet port to prevent fluid flowing from the inlet port to the outlet port and, in an open position, is displaced from between the inlet port and the outlet port such that fluid can flow from the inlet port to the outlet port. The drain valve is normally closed such that fluid flows around and collects in the fluid system in normal operation, without flowing through the drain valve. When it is desired to drain fluid from the system, the drain valve is opened, by displacing the moveable part, and the fluid flows out through the valve and a drain line where it can be ejected or collected in a fluid reservoir to be disposed of or reused as required. Drain valves may be manual and opened by hand e.g. by means of a lever and/or may be motor driven or otherwise automatically opened. Drain valves typically have an override function to open the valve. The override function is provided by means of a cable that is affixed, at one end, to the movable part of the drain valve e.g. by a pin located on the moveable valve part. The other end of the cable is located remote from the valve and is accessible to be pulled by a user either manually or by means of a motor of the like. In the default, closed state, the moveable valve part is located in a valve housing to block the flow of fluid through the valve housing. The moveable part is biased by e.g. a spring to this default position. To open the valve, the cable is pulled in a direction away from the valve. Because the cable is fixed to the moveable part, as the cable is pulled away from the valve, the moveable part is pulled relative to the valve housing, against the force of e.g. the spring, to move the moveable part into the open state. Fluid can then flow from the system via the drain valve. To re-close the valve, the cable is released (i.e. the pulling force is removed) and returns towards the valve and the attached moveable body therefore re-locates in the valve housing between the inlet port and the outlet port.

A problem that has been identified with such override opening is that, often, the cable and the valve are not precisely aligned e.g. due to a slightly imprecise mounting of the valve housing and/or the valve body or the orientation of the cable. It is difficult, when assembling the valve in the fluid system, for an engineer/maintenance personnel to gauge whether the valve housing is fitted to be in a precise upright position relative to the cable when the drain valve and other fluid system parts are assembled and clamped into position. The drain valve housing could be slightly skewed relative to exact upright and this would be difficult for an engineer to judge. This is particularly so in cases where the drain valve is installed in a small or difficult to access location. This can mean that the moveable part does not properly re-locate in the valve housing when the cable is released and so the valve does not close properly. The moveable part then has to be manually pushed back into the closed position.

There is, therefore, a need for an assembly that is better able to ensure alignment between an override cable and the drain valve.

### SUMMARY

According to the present disclosure, there is provided a drain valve assembly comprising: an assembly housing; a drain valve having a valve housing through which a flow channel is defined from an inlet port and an outlet port, and a moveable valve part moveable relative to the valve housing between a closed position between the inlet port and the outlet port and an open position displaced from between the inlet port and the outlet port;
an override cable having a first end attached to the moveable valve part and a second end remote from the drain valve, the cable positioned to move in a substantially vertical direction when a pulling force is applied, to move the moveable valve part to the open position, and being biased to return the moveable part to the closed position when the pulling force is removed from the cable; and characterised by comprising: a cable clamp bracket fitted around the cable and defining a channel through which the cable can move in the substantially vertical direction and having a flange part providing two attachments points to secure the clamp bracket relative to the assembly housing and to prevent rotation of the clamp bracket relative to the assembly housing; and/or a drain valve clamp bracket fitted around the drain valve and defining a channel through which the moveable part of the drain valve can move in the substantially vertical direction and having a flange part providing two attachments points to secure the drain valve clamp bracket relative to the assembly housing and to prevent rotation of the drain valve clamp bracket relative to the assembly housing.

The clamp bracket may be provided around one or both of the cable and the drain valve.

The bracket may be provided instead of or in addition to the existing P-clamps.

### BRIEF DESCRIPTION

Examples of the improved override assembly according to the disclosure will now be described with reference to the drawings. It should be noted that these are examples only, and that variations are possible within the scope of the claims.
Figure 1 is an example of a fluid system incorporating a drain valve assembly.
Figure 2 shows a typical system incorporating a drain valve assembly to aid in explanation.
Figure 3 shows a drain valve assembly as in Fig. 2 in more detail.
Figures 4A and 4B are different views of the override such as in Fig. 3, shown to explain the problem of known assemblies.
Figure 5 shows one example of a drain valve assembly according to this disclosure.
Figure 6 shows further details of an example of a drain valve assembly such as shown in Fig. 5.
Figure 7 shows another example of a drain valve assembly according to this disclosure
Figure 8 shows another example of a drain valve assembly according to this disclosure, combing the features of Figs. 5 and 7.
Figure 9 is a detailed view through section A-A of Fig. 8.
Figure 10 is a detailed view through section B-B of Fig. 8.

### DETAILED DESCRIPTION

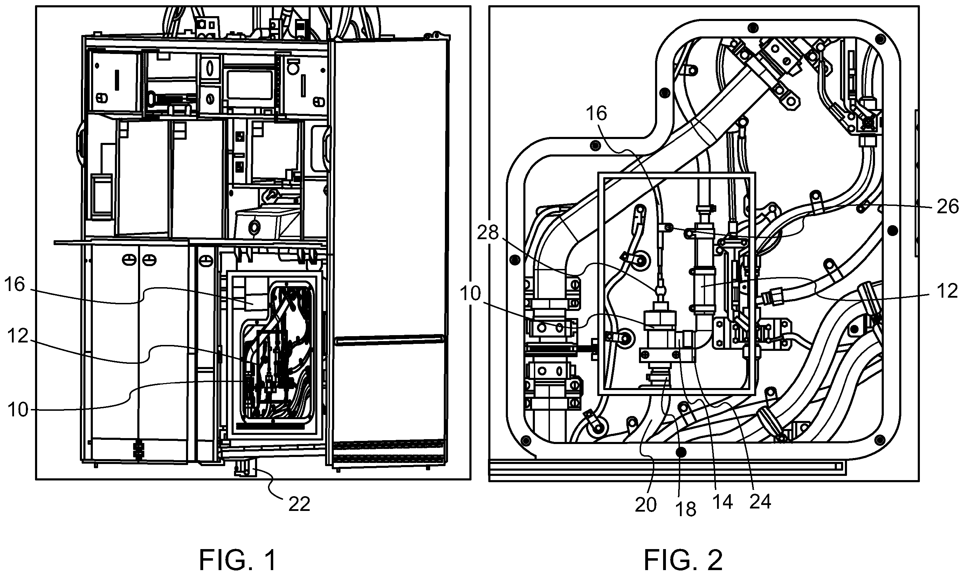

The conventional drain valve assembly mentioned above will now be briefly described again with reference to Figs. 1 to 3, 4A and 4B.

Figure 1 shows a water system in an aircraft galley unit, by way of example. The modified drain valve assembly described below can, however, be used in many different applications. In the system shown, the fluid system comprises various pipes and lines, but only the drain valve assembly will be described here. As mentioned above, there are various reasons why fluid may need to be drained from the fluid system and the drain valve 10 is provided to drain fluid from the system when it is opened from is normally closed state. The collected fluid (here e.g. waste water) collects in the fluid line 12. The line 12 is fluidly connected to an inlet port 14 of the drain valve 12. So long as the drain valve is closed, that fluid cannot flow out of the system through the drain valve. When the drain valve is opened, by pulling the cable 16 to lift the valve body from the valve housing, the fluid in the fluid line can flow through the drain valve 10 from the inlet port to the outlet port 18 into a drain line 20 for ejection at an outlet 22.

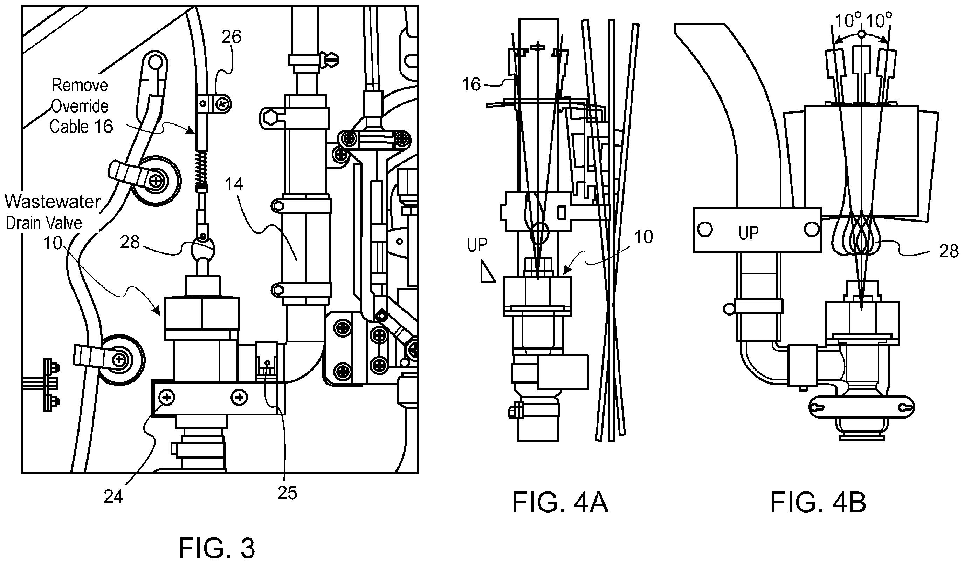

As can be seen in Fig. 2 and, closer-up in Fig. 3, the various parts of the system are secured in position by means of clamps or other fasteners. The drain valve is secured by means of a clamp or bracket 24, and is also secured relative to the fluid line by a bracket 25 e.g. a P-bracket secured around the elbow of the fluid line connecting to the inlet port of the drain valve.. The cable 16 is held in position by another clamp or bracket 26 e.g. a so-called P clamp which forms a channel through which the cable extends and allows the cable to move through the channel but ensures that the cable is not otherwise able to move freely in other directions. This keeps the cable relatively well aligned with the drain valve. The cable is secured to the moveable part of the drain valve by e.g. a pin and ring attachment 28 between the end of the cable and the moveable part.

Although the brackets 24, 28 do ensure some alignment between the cable, or its direction of movement, and the drain valve, it can happen that the brackets, when installed and fastened, are still skewed relative to each other/relative to the desired precise aligned position, and this might not be apparent to the naked eye. Further, the P-brackets currently used for the cable and the drain valve have a single attachment point around which the bracket can rotate. The problems that can arise have been mentioned above and can be seen, for example, in Figs. 4A and 4B. If the cable and the drain valve are not precisely aligned, the angle at which the cable moves the moveable valve part relative to the valve housing can vary and the part is not moved vertically relative to the housing. Because of this, the valve may not close properly when returned to the default closed position, requiring manual closing, and/or can results in leakage and/or can cause friction or wear on the parts.

The assembly of this disclosure improves the alignment between the cable and the drain valve to mitigate or avoid such problems. This is achieved by means of a bracket clamping the cable and/or a bracket clamping the drain valve, the brackets having two points of attachment to an assembly housing to prevent rotation of the cable and/or drain valve relative to the assembly housing.

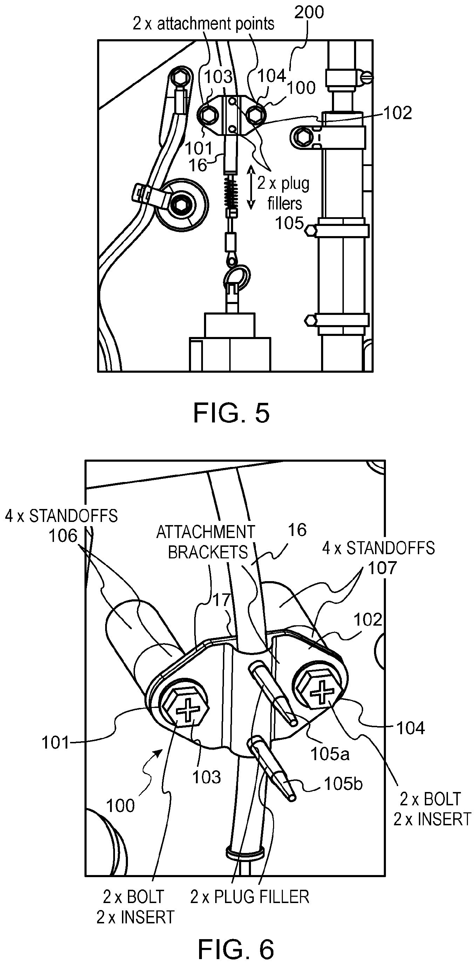

In one example, described with reference to Figs. 5 and 6, a clamp bracket 100 is mounted over the cable 16, the clamp bracket defining a channel 17 through which the cable passes. The cable comprises an outer sleeve and a pull wire running along the inside of the sleeve. The wire is attached at one end to the drain valve, and the other end is accessible to be pulled, by the user, to actuate the valve. The wire is moveable along and relative to the sleeve. The clamp bracket clamps the sleeve in place but not so tightly that it compresses the sleeve against the wire to prevent movement of the wire relative to the sleeve. While the cable sleeve is clamped, therefore, the wire can still be pulled to move to open and close the valve. The clamp bracket 100 is formed with a flange 101, 102 either side of the channel through which fasteners 103, 104 pass to secure the clamp bracket to an assembly housing 200. The two attachment points ensure that the clamp bracket, and hence the channel through which the cable passes and, so, the orientation of the movement of the cable wire, cannot rotate and so vertical alignment (direction V) is maintained. The clamp bracket ensures correct and aligned installation of the cable relative to the drain valve and also prevents the cable from twisting and changing its angle due to tension and motion.

Plug fillers 105 can be inserted into the clamp bracket to extend into the channel 17 to ensure a relative tight fit of the cable in the channel (although still allowing movement of the wire through the cable sleeve). The depth by which the fillers extend into the channel can vary depending on the size of the cable. The clamp bracket may be made of metal, but can also be made of other materials.

The clamp bracket 100 is shown in more detail in Fig. 6. In this example, there are two plug fillers 105a, 105b but the number of fillers may be varied.

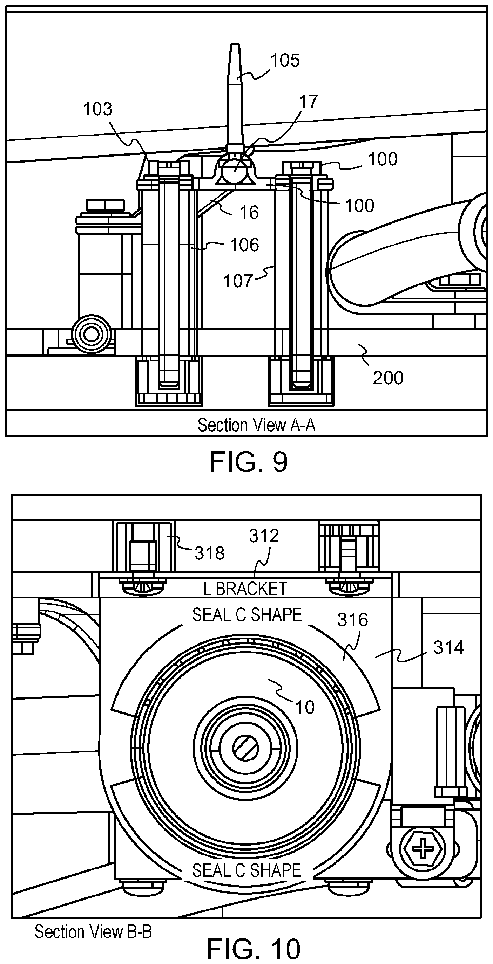

In the example shown, spacers or 'stand-offs' 106, 107 are provided between the bracket and the assembly housing 200 to ensure the correct spacing of the channel 17 and, hence, the cable 16 from the assembly housing. This can be varied by increasing the size or number of such stand-offs. The clamp bracket can also be seen from a different view in Fig. 9.

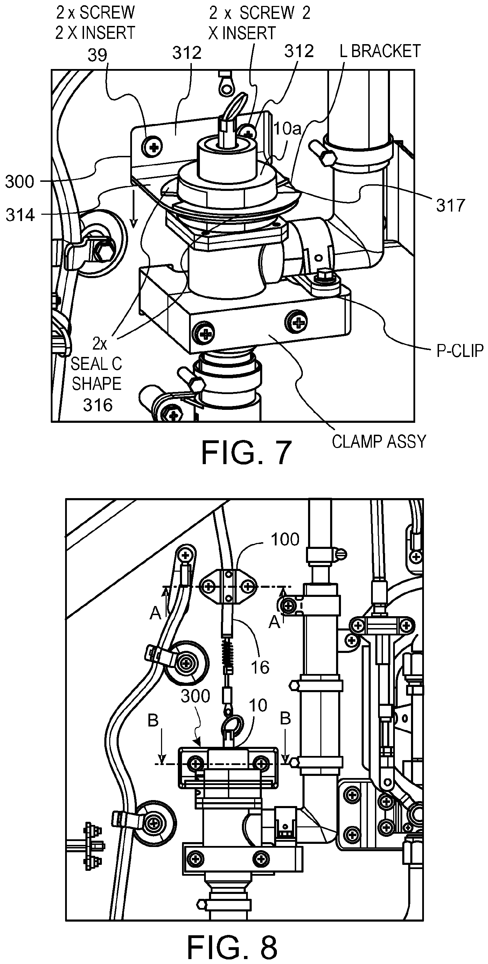

In another example, described with reference to Fig. 7, the alignment is improved by providing a clamp bracket 300 around the valve part 10a, which again has two points of attachment 301, 302 with the assembly housing 200 and defines a channel 317 to receive the valve part 10a such that it remains vertically aligned relative to the housing and cable. The valve part 10a may be a fixed valve part or may be a moveable valve part, in which case the channel should be sized such that the valve part is able to move vertically through the channel 317 when the cable is operated. The clearance fit is selected to allow a slightly looser fit and to not overstrain the valve, but to not allow the valve to tilt far enough to cause the problems described above with reference to Figs. 4A and 4B. The clamp bracket prevents skewed or misaligned installation of the drain valve relative to the assembly housing and prevents any relative rotational movement.

In the example shown, the clamp bracket 300 is essentially L-shaped and has an attachment flange 312 through which the fasteners 301, 302 provide the two points of attachment. A bracket part 314 extends from the flange 312 and defines the channel 317 through which the drain valve passes. A seal 316 may be provided around the channel 317. In this example, the seal is formed of two C-shaped seal parts but other seal designs are also possible. The clamp bracket 300 is preferably in addition to the existing clamp assembly as described above and therefore provides improved control over the valve installation angle since the valve is now supported at more points. As with the cable clamp bracket 100, the drain valve clamp bracket 300 may be mounted to the assembly housing 200 via spacers or stand-offs 318. A cross-sectional view is seen in Fig. 10.

Improvements in alignment between the cable 16 and the drain valve 10 are achieved by either one of the above described clamp brackets - i.e. by clamping either the cable or the drain valve. The improvements are enhanced, however, if both clamp brackets are used in combination as shown in Fig. 8.

## Claims

1. A drain valve assembly comprising:
an assembly housing (200);
a drain valve (10) having a valve housing through which a flow channel is defined from an inlet port (14) and an outlet port (18), and a valve part moveable relative to the valve housing between a closed position between the inlet port and the outlet port and an open position displaced from between the inlet port and the outlet port;
an override cable (16) having a first end attached to the valve housing or the valve part (10a) and a second end remote from the drain valve, the cable positioned to move in a substantially vertical direction when a pulling force is applied, to bring the valve to the open position, and being biased to return the valve to the closed position when the pulling force is removed from the cable; and **characterised by** comprising:
a cable clamp bracket (100) fitted around the cable and defining a channel (17) through which the cable can move in the substantially vertical direction and having a flange part (101, 102) providing two attachments points (103, 104) to secure the clamp bracket relative to the assembly housing (200) and to prevent rotation of the clamp bracket relative to the assembly housing; and/or
a drain valve clamp bracket (300) fitted around the drain valve and having a flange part providing two attachments points (301, 302) to secure the drain valve clamp bracket relative to the assembly housing (200) and to prevent skewed installation of the drain valve clamp bracket relative to the assembly housing.

2. The drain valve assembly of claim 1, comprising both the cable clamp bracket (100) and the drain valve clamp bracket (300).

3. The assembly of claim 1 or 2, wherein the cable (16) is attached to the moveable valve part by means of a pin (28).

4. The assembly of any preceding claim, wherein the drain valve is biased to the closed position by means of a spring.

5. The assembly of any preceding claim, wherein the cable clamp bracket further comprises one or more plug fillers (105) extending through the clamp bracket into the channel (17).

6. The assembly of any preceding claim, wherein the drain valve clamp bracket is substantially L-shaped.

7. The assembly of any preceding claim, wherein the drain valve clamp further comprises one or more seals within the channel (317).

8. The assembly of any preceding claim, further comprising spacers (106, 107) between the cable clamp bracket and/or the drain valve clamp bracket and the assembly housing.

9. The assembly of any preceding claim, wherein the cable clamp bracket and/or the drain valve clamp bracket is made of metal.

10. The assembly of any preceding claim, further comprising fasteners at each of the attachment points.

11. The assembly of claim 10, wherein the fasteners are screws.

12. The assembly of any preceding claim, further comprising a P-clamp having a single attachment point defining a channel through which the cable extends.

13. The assembly of any preceding claim, further comprising a P-clamp having a single attachment point securing the drain valve to a fluid line leading to the inlet port.
